# EUROPÄISCHE PATENTSCHRIFT

(11) **EP 1 404 062 B1**
(45) Veröffentlichungstag und Bekanntmachung des Hinweises auf die Patenterteilung: **26.04.2006**
(21) Anmeldenummer: 03020314.5
(22) Anmeldetag: 09.09.2003
(51) Int. Cl.: H04L 12/40, G05B 19/418, B60R 16/02, G01R 31/00

(54) **Kommunikationssystem mit anschliessbarem Interfaceelement**
Communication system with connectable interface element
Système de communication avec un élément d'interface connectable

(30) Priorität: 28.09.2002 DE 10245465
(43) Veröffentlichungstag der Anmeldung: 31.03.2004
(73) Patentinhaber: Rexroth Indramat GmbH, 97816 Lohr am Main (DE)
(72) Erfinder: Patz, Kai-Uwe, 97082 Würzburg (DE); Hielscher, Frank, 97816 Lohr (DE)
(74) Vertreter: Thürer, Andreas

(56) Entgegenhaltungen:
- DE-A- 10 048 144
- DE-A- 10 110 776
- US-A- 5 345 384
- US-B1- 6 351 828

## Beschreibung

### Technisches Gebiet

Die Erfindung betrifft ein Kommunikationssystem mit einer Mehrzahl von Teilnehmern, die über eine Datenleitung miteinander kommunizieren, wobei die Datenleitung ferner zumindest einen Anschluß zum Anschließen eines Interfaceelements zur definierten Kommunikation mit einem Teilnehmer aufweist. Insbesondere betrifft die Erfindung ein Netzwerk mit einer Vielzahl von an das Netzwerk angeschlossenen Teilnehmern und jeweils definiert zugeordneten, ebenfalls an das Netzwerk angeschlossenen Anschlüssen zum Anschließen von einem oder mehreren portablen Bedien- und Visualisierungsterminals. Ferner betrifft die Erfindung einen Anschluß sowie ein Interfaceelement zur Verwendung in einem solchen Kommunikationssystem als auch ein Verfahren zur Identifikation eines Teilnehmers eines Kommunikationssystems.

### Stand der Technik

In vielen technischen Anwendungen werden heutzutage Kommunikationssysteme eingesetzt, bei denen das Kommunikationssystem eine Vielzahl von Teilnehmen umfaßt und die Teilnehmer über eine Kommunikationsleitung miteinander verbunden sind, um so über die Kommunikationsleitung miteinander kommunizieren zu können. Beispielsweise kommunizieren in automatisierten Fertigungsanlagen die zur Steuerung von Maschinen oder Robotern eingesetzten Steuerungseinrichtungen miteinander, um einen zeitlich synchronisierten Maschinenablauf oder Roboterbewegungsablauf sicherzustellen. Bei den Steuerungseinrichtungen handelt es sich hierbei typischerweise um Industrieprozessorsysteme, beispielsweise speicherprogrammierbare Steuerungen oder ,embedded processor'-Systeme, die jeweils aber kein eigenes, zugeordnetes Terminal zur Bedienung, Programmierung oder Überwachung aufweisen, sondern üblicherweise von einem Zentralrechner aus programmiert werden. Der Zentralrechner ist hierzu in der Regel über eine Datenleitung mit den Steuerungseinrichtungen verbunden, wobei der Zentralrechner zumeist weit entfernt von der Fertigungsanlage aufgebaut ist. Tritt nun im Betrieb der Fertigungsanlage ein Fehler auf, so ist es für einen Bediener teilweise unumgänglich, den Fehler vor Ort zu suchen, d.h. eine gleichzeitige Kontrolle sowohl des in der jeweiligen Steuerung ablaufenden Programmes durchzuführen als auch den Maschinen- oder Roboterablauf zu beobachten. Hierzu ist es für den Bediener dann erforderlich, ein mobiles Terminal vor Ort mit der betroffenen Steuerung zu verbinden. Bei den im Stand der Technik bekannten Steuerungssystemen ist hierfür üblicherweise ein Anschluß entweder an der Verbindungsleitung zum Zentralrechner oder unmittelbar an der Steuerung vorgesehen. Zumindest in den Fällen, in denen der Anschluß an der Verbindungsleitung angeordnet ist und somit hardwareseitig nicht ausschließlich einem Steuerung unmittelbar zugeordnet ist, muß zur Auswahl und Identifikation der betroffenen und anzusprechenden Steuerung in der Regel eine Kennung über das Terminal eingegeben werden. Auf der Basis der eingegebenen Kennung wird das Terminal bei der durch die Kennung identifizierten Steuerung angemeldet und tritt gezielt mit dieser Steuerung in eine Kommunikationsverbindung. Die Kennungen sind hierzu üblicherweise auf in Papierform ausgedruckten Referenzlisten vermerkt, auf die der Bediener zum Starten einer Kommunikationsverbindung zurückgreifen muß. Hierbei ist es jedoch erforderlich, die Referenzlisten stets allen Änderungen des Kommunikationssystems anzupassen und zu aktualisieren. Insbesondere bei häufigen Änderungen der Anlage ist dies einerseits sehr arbeitsaufwändig. Andererseits hat es sich in der Praxis aber auch herausgestellt, daß die Referenzlisten häufig fehlerbehaftet sind, wodurch es dann entweder zu Fehlbedienungen oder zu überhaupt keinem Verbindungsaufbau kommt.

Um hier eine Verbesserung zu erzielen, wird in der deutschen Patentanmeldeschhft DE 101 10 776 A1 vorgeschlagen, eine mobile elektronische Bedien- und/oder Beobachtungseinrichtung zu verwenden, die eine drahtlose Kommunikation mit der Steuerung einer zu beobachtenden Maschine ermöglicht. Entweder mittels Schnittstellen zur gerichteten, drahtlosen Anpeilung oder mittels in der Sendereichweite bzw. in der Empfangsempfindlichkeit abgestimmten Sende- und/oder Empfangseinrichtungen mit einem örtlich begrenzten Funktions- bzw. Wirkungsbereich ist eine eindeutige Zuordnung der Bedien- und/oder Beobachtungseinheit zu der Steuerung der zu beobachtenden Maschine möglich. Die Bedienung und/oder Beobachtung der Maschine kann nach erfolgter Anmeldung hierbei auch über ein anderes als das Anmeldegerät erfolgen. Nachteilig an der hier vorgeschlagenen Lösung ist, daß die Geräte zur drahtlosen Übertragung einerseits teuer sind, da Sende- und Empfangsvorrichtungen vorzusehen sind, und daß ferner im Rahmen der Anmeldung ein bidirektionales Protokoll, ein sogenannter bidirektionaler Handshake, zu durchlaufen ist, um eine gegenseitige Identifikation sowie die gegenseitige Sende- und Empfangsbereitschaft sicherzustellen. Ferner ist es hier nicht möglich, fest verdrahtete Sicherheitsschaltkreise vorzusehen, die mit dem mobilen Terminal verbunden werden können.

### Darstellung der Erfindung

Der Erfindung liegt somit die Aufgabe zugrunde, ein Kommunikationssystem mit einer Vielzahl von Teilnehmern, die über eine gemeinsame Datenleitung miteinander verbunden sind, zur Verfügung zu stellen, bei dem es möglich ist, mit einem Interfaceelement gezielt mit einem Teilnehmer in Verbindung zu treten. Der apparatetechnische Aufwand soll hierbei möglichst gering sein. Ferner soll die Herstellung einer Verbindung eindeutig und fehlerfrei erfolgen sowie für einen Bediener mit geringem Bedienaufwand verbunden sein.
Des weiteren ist es eine Aufgabe der Erfindung, ein Interfaceelement zur Verfügung zu stellen, mit dem ein gezieltes, eindeutiges und möglichst fehlerfreies in-Verbindung-treten mit einem Teilnehmer des Kommunikationssystems in einer für einen Bediener komfortablen Weise möglich ist.

Ferner ist es eine Aufgabe der Erfindung, ein Verfahren zur Identifikation eines Teilnehmers eines Kommunikationssystems zur Verfügung zu stellen.

Diese Aufgaben werden erfindungsgemäß durch das Kommunikationssystem gemäß Anspruch 1, das Interfaceelement gemäß Anspruch 13 sowie das Verfahren gemäß Anspruch 14 gelöst. Weitere vorteilhafte Ausgestaltungen der Erfindung finden sich in den Unteransprüchen.

Das erfindungsgemäße Kommunikationssystem umfaßt eine Mehrzahl von Teilnehmern, wobei die Teilnehmer über eine gemeinsame Kommunikationsleitung miteinander verbunden sind. Weiterhin umfaßt das Kommunikationssystem zumindest einen Anschluß zum Anschließen eines Interfaceelements zur Kommunikation mit einem definierten Teilnehmer, der dem Anschluß als zugeordnet definiert ist. Der Anschluß ist ebenso mit der Kommunikationsleitung verbunden. Um denjenigen Teilnehmer, der dem Anschluß als zugeordnet definiert ist, zu identifizieren, umfaßt der Anschluß erfindungsgemäß ein auslesbares Mittel zur Identifikation des dem Anschluß als zugeordnet definierten Teilnehmers. Das auslesbare Mittel, ist hierzu von einem an den Anschluß angeschlossenen Interfaceelement auslesbar.

Die Teilnehmer als auch der Anschluß sind somit verteilt angeordnet und an eine gemeinsame Kommunikationsleitung oder auch an mehrere, miteinander verbundene Kommunikationsleitungen angekoppelt und hierüber miteinander verbunden. Das Kommunikationssystem ist insofern auch beliebig erweiterbar, indem einfach weitere Teilnehmer oder Anschlüsse an das System angekoppelt werden. Zur Ankopplung eines Teilnehmers oder eines Anschlusses kann auch jeweils eine separate Verbindungsleitung von der Kommunikationsleitung abzweigen, die dann an ihrem freien Ende mit dem anzukoppelnden Teilnehmer oder Anschluß verbunden ist. Die Kommunikationsleitung ist zweckmäßig, wie aus dem Stand der Technik bekannt, als Datenleitung, beispielsweise als Bussystem, ausgeführt.
Der Teilnehmer und der dem Teilnehmer zugeordnete Anschluß müssen somit nicht unmittelbar miteinander verbunden sein oder an einer bestimmten Position in der Kommunikationsleitung angeordnet sein, sondern können an beliebigen Positionen an die Kommunikationsleitung angekoppelt sein. Hierdurch ist es möglich, den Anschluß an einer für einen Bediener leicht zugänglichen Stelle der Kommunikationsleitung anzubringen, ohne daß der zugeordnete Teilnehmer hierfür selbst zugänglich sein müßte. So kann beispielsweise ein Interfaceelement von einem Bediener in komfortabler Bedienweise an dem Anschluß angeschlossen werden und dem Bediener somit eine Kommunikation mit dem zugeordneten Teilnehmer ermöglichen. Als Interfaceelement kommt zweckmäßig ein portables Bedien- und Visualisierungsinterface, vorzugsweise ein portables Terminal mit einer Tastatur und einem Monitor, zum Einsatz. Über die Tastatur ist eine Bedienung und Eingabe von Befehlen und über den Monitor eine Visualisierung der Programmabläufe möglich.
Im Gegensatz zu der in der DE 101 10 776 A1 vorgeschlagenen Vorgehensweise wird hier die Verbindung drahtgeführt, d.h. über eine Kommunikationsleitung, aufgebaut, wohingegen in DE 101 10 776 A1 eine drahtlose Verbindung vorgeschlagen wird. Die drahtgeführte Verbindung weist hierbei wesentliche Vorteile gegenüber der drahtlosen Verbindung auf. Insbesondere sind keine Sende- und Empfangseinheiten vorzusehen, wodurch der apparative Aufbau erheblich einfacher und kostengünstiger zu realisieren ist. Auch ist eine Störung des Betriebs eines Anschlusses durch benachbarte Sende- oder Empfangseinheiten hierdurch vermieden. Daher ist bei Anordnung mehrerer Anschlüsse gemäß der Erfindung auch kein Mindestabstand eines Anschlusses zu einem nächsten Anschluß zu berücksichtigen, um einen fehlerfreien Betrieb des jeweiligen Anschlusses zu gewährleisten. Eine drahtgebundene Kommunikation ist auch im Hinblick auf Umwelteinflüsse, wie beispielsweise Störsignale durch Blitze oder andere Signalquellen, unproblematischer und zuverlässiger.
Jedoch ist es erforderlich, eine eindeutige Zuordnung des Anschlusses oder der Anschlüsse zu dem jeweils betreffenden, als zugeordnet definierten Teilnehmer zu schaffen, so daß über die Kommunikationsleitung eine gerichtete Kommunikationsverbindung zwischen einem an den jeweiligen Anschluß angeschlossenen Interface-Element und dem betreffenden Teilnehmer aufgenommen werden kann. Hierzu umfaßt ein jeder der an das Kommunikationssystem angekoppelten Anschlüsse erfindungsgemäß jeweils ein auslesbares Mittel zur Identifikation des dem Anschluß als zugeordnet definierten Teilnehmers, wobei das auslesbare Mittel von einem an den Anschluß angeschlossenen Interfaceelement auslesbar ist. In dem auslesbaren Mittel sind Zuordnungs- bzw. Identifikationsangaben zur Identifikation des dem jeweiligen Anschluß als zugeordnet definierten Teilnehmers auslesbar abgelegt. Sowohl das Vorrätighalten der Identifikationsangaben als auch der Vorgang der Identifikation des zugeordneten Teilnehmers erfolgt somit vorteilhaft vollautomatisch, und insbesondere ohne daß ein Bediener hierzu einen Bedienschritt vornehmen muß. Hierdurch wird zum Einen der Bedienkomfort erheblich gesteigert, da ein Bediener weder über die Topologie des Kommunikationssystems informiert sein muß noch einen Identifikations-Code vorrätig halten und zur Verbindungsaufnahme dem System vorgeben muß, um mittels eines an einem Anschluß angeschlossenen Interfaceelement mit dem dem Anschluß als zugeordnet definierten Teilnehmer kommunizieren zu können. Ferner wird durch die erfindungsgemäße Ausführung des Kommunikationssystems auch die Betriebssicherheit erheblich erhöht, da eine fehlerhafte Identifikation eines Teilnehmers durch Vorgabe eines fehlerhaften Identifikations-Codes durch den Bediener nicht mehr möglich ist.

Zweckmäßig ist das Kommunikationssystem als lokales Netzwerk ausgebildet. Topologie als auch Betriebsweise solcher lokaler Netzwerke, wie beispielsweise Kommunikationsprotokolle der Teilnehmer untereinander, sind im Stand der Technik weithin bekannt und können für die vorliegende Erfindung weitgehend übernommen werden. Besonders bevorzugt ist das Kommunikationssystem als Ethernet-Netzwerk und ganz besonders bevorzugt als IP-Netzwerk (IP = ,Internet Protocol') ausgebildet. Aufgrund der weiten Verbreitung von Ethemet-Netzwerken im Markt sind Bauteile für Ethernet-Netzwerke im Handel kostengünstig und in hinreichenden Stückzahlen erhältlich. Die Ausgestaltung der Erfindung als IP-Netzwerk erbringt ferner den Vorteil, daß das erfindungsgemäße Kommunikationssystem als Teil des weltweiten Intemet-Netzwerkes betrieben werden kann und somit von jeder Position innerhalb des erfindungsgemäßen Kommunikationssystems auch mit jedem Teilnehmer des weltweiten Intemet-Netzwerks kommuniziert werden kann und umgekehrt. Ist das Kommunikationssystem als IP-Netzwerk ausgebildet, so ist besonders zweckmäßig in dem auslesbaren Mittel des Anschlusses eine IP-Adresse des dem Anschluß als zugeordnet definierten Teilnehmers abgelegt. Mittels der IP-Adresse ist der Teilnehmer eindeutig identifizierbar.

In einer bevorzugten Ausgestaltung der Erfindung sind die Teilnehmer Steuerungen zur Steuerung von Maschinen und/oder Robotereinheiten. Ist das die Steuerungen umfassende Kommunikationssystem erfindungsgemäß weitergebildet, so ist es einerseits möglich, die Programmabläufe der Steuerungen mit Hilfe eines mobilen Interfaceelements jeweils vor Ort zu verfolgen und gegebenenfalls Änderungen oder andere Eingriffe vorzunehmen. Andererseits ist es nicht mehr wie in der DE 101 10 776 A1 erforderlich, die Steuerungen jeweils beabstandet voneinander zu positionieren, um eine fehlerhafte Interaktion der Sende- und Empfangseinheiten zu vermeiden.

Zweckmäßig umfaßt das erfindungsgemäße Kommunikationssystem eine Vielzahl von Anschlüssen zum Anschließen einer oder mehrerer Terminals, wobei die Anschlüsse jeweils an von den zugeordneten Teilnehmern unabhängigen Positionen mit der Kommunikationsleitung verbunden sind. Jeder der Anschlüsse ist genau einem Teilnehmer des Kommunikationssystems zugeordnet und umfaßt zur Identifikation des zugeordneten Teilnehmers ein auslesbares Mittel, in dem eine Zuordnungsinformation über den zugeordneten Teilnehmer abgelegt ist. Zweckmäßig ist für jeden Teilnehmer zumindest ein Anschluß vorgesehen. Es können jedoch auch für einen Teilnehmer mehrere Anschlüsse vorgesehen sein, wobei hier zweckmäßig darauf zu achten ist, daß zu einer gegebenen Zeit nur ein Interfaceelement mit dem Teilnehmer in der Absicht kommunizieren kann, aktiv in den Betrieb oder die Betriebsweise des Teilnehmers einzugreifen.

Bevorzugt ist das auslesbare Mittel zur Identifikation des dem Anschluß als zugeordnet definierten Teilnehmers ein programmierbarer Controller, der in den Anschluß integriert ist. Zweckmäßig ist der Controller über eine separate, in dem Anschluß vorgesehene Verbindungsleitung, vorzugsweise einen separaten seriellen Anschlußdraht, mit dem Interfaceelement verbindbar und auslesbar, so daß Kommunikationsleitungen des Anschlusses von dem Auslesevorgang und dem Identifikationsvorgang nicht betroffen sind.
Besonders zweckmäßig umfaßt der programmierbare Controller ein permanentes Speicherelement zur Speicherung der Zuordnungs- bzw. Identifikationsinformation. Zweckmäßig ist das permanente Speicherelement hierbei in einer Konfigurationsphase über das Interfaceelement programmierbar.

In einer besonders zweckmäßigen Weiterbildung der Erfindung umfaßt der Anschluß zusätzlich eine Sicherheitsleitung, die eine unmittelbare, drahtgebundene Verbindung zwischen dem zugeordneten Teilnehmer und dem angeschlossenen Interfaceelement herstellt. Die Sicherheitsleitung ist zweckmäßig entweder mit einem in dem Teilnehmer oder in dem Interfaceelement angeordneten Sicherheitsschaltkreis verbunden oder ist Teil eines solchen Sicherheitsschaltkreises. Somit kann von dem angeschlossenen Interfaceelement unmittelbar auf den Sicherheitsschaltkreis eingewirkt werden. Ein solcher Sicherheitsschaltkreis kann beispielsweise ein Not-Aus sein.

Der Anschluß umfaßt zweckmäßig zusätzlich eine Spannungsversorgungsleitung zur Spannungsversorgung des angeschlossenen Interfaceelements. Somit muß für das Interfaceelement keine weitere Spannungsversorgung vorgesehen werden, wobei das Interfaceelement zweckmäßig zusätzlich mit einer Akku-Stromversorgung ausgestattet ist, um einen Wechsel des Anschlusses zu ermöglichen, ohne daß das Interfaceelement aufgrund der kurzzeitigen Unterbrechung der Spannungsversorgung heruntergefahren werden muß.

In einem weiteren Aspekt der Erfindung wird ein Anschluß zur Verwendung in einem wie oben beschriebenen Kommunikationssystem zur Verfügung gestellt. Der Anschluß ist entweder unmittelbar oder mittels einer Verbindungsleitung mit der Kommunikationsleitung verbindbar.

In einem weiteren Aspekt der Erfindung wird ein Interfaceelement zur Verwendung in einem wie oben beschriebenen erfindungsgemäßen Kommunikationssystem zur Verfügung gestellt. Zweckmäßig ist das erfindungsgemäße Interfaceelement ein portables Bedien- und Visualisierungsinterface, vorzugsweise ein portables Terminal, das Mittel aufweist, um die auslesbaren Mittel des erfindungsgemäß ausgeführten Anschlusses auszulesen und weiterzuverarbeiten. Zweckmäßig umfassen diese Mittel zum Auslesen der auslesbaren Mittel des Anschlusses separate, von den übrigen Kommunikationsleitungen getrennte Verbindungsleitungen, die zweckmäßig als Adern eines zu dem Anschluß gegenpolig ausgeführten, mehrpoligen Steckers zum Anschließen an den Anschluß ausgeführt sind. Ferner ist das erfindungsgemäße Interfaceelement zweckmäßig mit Anschlußelementen für die Weiterleitung von einer in dem Anschluß vorgesehenen Sicherheitsleitung und/oder von Spannungsversorgungsleitungen ausgestattet.

In einem weiteren Aspekt der Erfindung wird ein Verfahren zur Identifikation eines einem Anschluß eindeutig zugeordneten Teilnehmers eines Kommunikationssystems zur Verfügung gestellt. Das Kommunikationssystem ist hierzu insbesondere gemäß der oben angeführten Beschreibung ausgeführt und umfaßt eine Mehrzahl von Teilnehmer, die über eine gemeinsame Kommunikationsleitung miteinander verbunden sind. Des weiteren umfaßt das Kommunikationssystem zumindest den einen Anschluß zum Anschließen eines Interfaceelements zur Kommunikation mit genau demjenigen definierten Teilnehmer, der dem Anschluß als zugeordnet definiert ist. Der Anschluß ist hierzu mit der Kommunikationsleitung verbunden. Das erfindungsgemäße Verfahren umfaßt die folgenden Verfahrensschritte:
- Anschließen des Interfaceelements an dem Anschluß;
- Auslesen eines in dem Anschluß angeordneten Mittels zur Identifikation des dem Anschluß als zugeordnet definierten Teilnehmers, vorzugsweise Auslesen einer IP-Adresse;
- Herstellen einer Kommunikationsverbindung zwischen dem Interfaceelement und dem dem Anschluß als zugeordnet definierten Teilnehmer.

Vorteilhaft kann das erfindungsgemäße Verfahren entsprechend den Ausführungen zu dem erfindungsgemäßen Kommunikationssystem weitergebildet sein.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: ein erfindungsgemäß ausgefiihrtes Kommunikationssystem;
- Figur 2: einen erfindungsgemäß ausgeführten Anschluß mit einem hieran angeschlossenen portablen Bedien- und Visualisierungsgerät.

In den Figuren sind nur die für das Verständnis der Erfindung wesentlichen Elemente und Bauteile dargestellt.
Gleiche oder gleichwirkende Bauteile und Elmente sind weitgehend mit denselben Bezugszeichen gekennzeichnet.

### Wege zur Ausführung der Erfindung

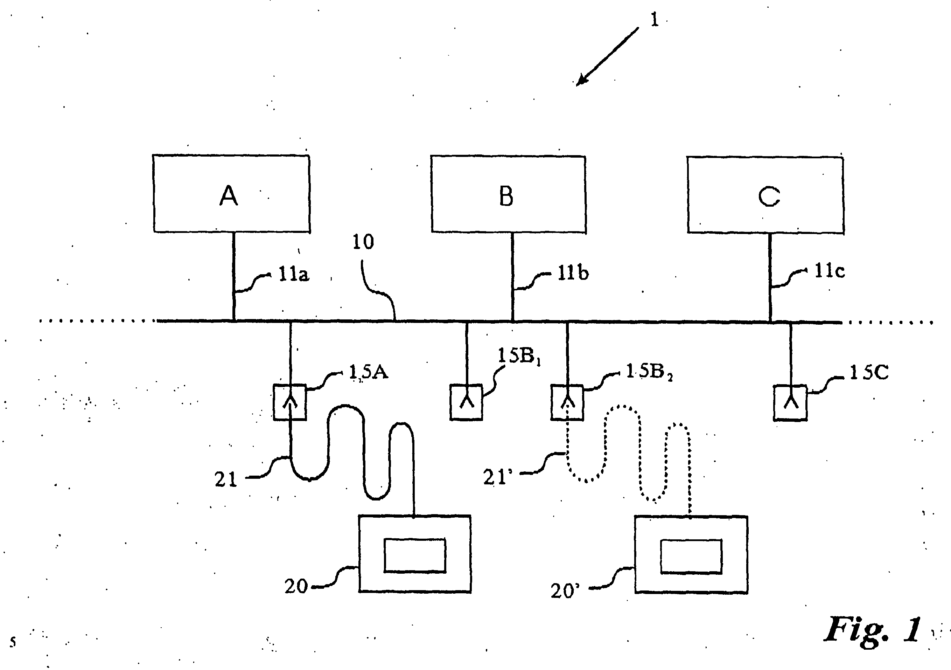

Figur 1 zeigt in schematischer Darstellung ein erfindungsgemäß ausgeführtes Kommunikationssystem 1. Das Kommunikationssystem 1 umfaßt eine Kommunikationsleitung 10, die sich zu beiden Seiten über die Darstellung hinaus weiter erstreckt, wie durch die Strichelung der Kommunikationsleitung 10 an ihren Enden zu erkennen ist. Wie in Figur 1 ferner dargestellt ist, zweigen von der Kommunikationsleitung 10 nach oben hin drei Teilnehmer ab, die hier als Steuerungen A, B und C ausgeführt sind und jeweils über eine Zwischenverbindungsleitung 11a, 11b, 11c mit der Kommunikationsleitung 10 verbunden sind. Die Anordnung der Abzweigstellen nach oben ist hierbei aber beliebig und dient nur zur vereinfachten Darstellung. Gleichermaßen können die Zwischenverbindungsleitungen 11a, 11b, 11c zu den Teilnehmern A, B, C des Kommunikationssystems auch nach unten oder seitlich abzweigen, oder die Teilnehmer ohne Zwischenverbindungsleitungen unmittelbar an die Kommunikationsleitung 10 angekoppelt sein. Auch können mehr oder auch weniger Teilnehmer an die Kommunikationsleitung angekoppelt sein.
Bei den in Figur 1 dargestellten Teilnehmern A, B, C des Kommunikationssystems 1 handelt es sich hier um Steuerungen beispielsweise einer oder mehrerer Maschinen, einer Fertigungseinheit oder einer Roboteranlage. Aufgabe der Steuerungen kann die Steuerung von Bewegungs- oder Ablaufvorgängen, wie beispielsweise die Verfahrvorgänge eines oder mehrerer Verstellmotoren einer Roboteranlage, sein. So kann mittels einer oder mehrerer Steuerungen der Betrieb und/oder der Bewegungsablauf eines Fertigungsroboters gesteuert werden. In Fertigungseinrichtungen sind oftmals mehrere solcher Fertigungsroboter jeweils in einer Gruppierung eng beieinander angeordnet, um so einen eng miteinander verbundenen Fertigungsprozess abarbeiten zu können.
Die Programmierung und Überwachung der Steuerungen erfolgt üblicherweise mittels in Figur 1 nicht dargestellter Programmier- und Überwachungseinrichtungen, beispielsweise einem Rechner, der über die Kommunikationsleitung 10 mit den Steuerungen A, B, C verbunden ist und mit diesen kommuniziert. Treten im Betrieb jedoch Probleme in einem von einer der Steuerungen gesteuerten Steuerungsablauf auf, so ist es teilweise unumgänglich, das in der betreffenden Steuerung ablaufende Steuerungsprogramm und den Steuerungsablauf vor Ort zu überprüfen. Hierzu sind, wie in Figur 1 dargestellt, Anschlüsse 15A, 15B₁, 15B₂, 15C an der Kommunikationsleitung 10 angekoppelt, so daß ein Signal über einen der Anschlüsse 15A, 15B₁, 15B₂, 15C in die Kommunikationsleitung 10 eingeleitet und aus der Kommunikationsleitung 10 empfangen werden kann. Die Anschlüsse 15A, 15B₁, 15B₂, 15C sind jedoch nicht unmittelbar, sondern nur mittelbar über die Kommunikationsleitung 10 mit den Steuerungen A, B, C verbunden. Ferner sind die Anschlüsse 15A, 15B₁, 15B₂, 15C so ausgeführt, daß ein als Schnittstelle zu einem Bediener dienendes Interfaceelement 20, ein sogenanntes HMI (HMI = ,Human Machine Interface'), an jedem der Anschlüsse 15A, 15B₁, 15B₂, 15C angeschlossen werden kann. Zweckmäßig sind die Anschlüsse hierzu als mehrpolige Steckverbindungen ausgeführt. Die Anschlüsse können aber auch unbesetzt sein, d.h. an einem, mehreren oder allen Anschlüssen ist kein Interfaceelement angeschlossen. Somit kann ein Bediener je nach Bedarf ein Interfaceelement an einem Anschluß anschließen oder auch wieder aus diesem Anschluß entfernen. Als Interfaceelement kommt hier insbesondere ein portables Bedien- und Visualisierungsgerät, beispielsweise ein Lab-Top, zum Einsatz. In Figur 1 ist an Anschluß 15A ein portables Bedien- und Visualisierungsgerät 20 über eine Verbindungsleitung 21 angeschlossen. Das portable Bedien- und Visualisierungsgerät war zuvor an Anschluß 15B₂ angeschlossen, wie in Figur 1 mit 20' und der gestrichelt dargestellten Verbindungsleitung 21' wiedergegeben ist.
Jeder der Anschlüsse 15A, 15B₁, 15B₂, 15C ist überdies genau einer Steuerung A, B oder C zugeordnet. Der Anschluß 15A ist der Steuerung A, die Anschlüsse 15B₁ und 15B₂ sind der Steuerung B und der Anschluß 15C der Steuerung C zugeordnet. Zwar ist grundsätzlich über die gemeinsame Kommunikationsleitung 10 eine Kommunikation aller Teilnehmer des Kommunikationssystems 1 miteinander möglich. Um jedoch insbesondere Fehlbedienungen zu vermeiden, ist es vorliegend nicht möglich, über ein und denselben Anschluß mit allen Steuerungen in der Absicht zu kommunizieren, in das Steuerungsablaufprogramm der betreffenden Steuerung oder den Steuerungsvorgang selbst einzugreifen. Eine solche Kommunikation, die darauf abzielt, in das Steuerungsablaufprogramm der betreffenden Steuerung oder den Steuerungsvorgang selbst einzugreifen, kann nur von einem einer Steuerung als zugeordnet definierten Anschluß aufgebaut und geführt werden. Umgekehrt können für eine Steuerung jedoch mehrere Anschlüsse vorgesehen und als zugeordnet
definiert sein. Vorteilhaft sind die Anschlüsse so platziert, daß beispielsweise ein hieran angeschlossenes Lab-Top mit einem Anschlußkabel mit üblicher Kabellänge an den Anschluß angeschlossen werden kann und das Lab-Top an einer für einen Bediener gut zugänglichen Stelle aufgestellt werden kann.
Die Zuordnung eines Anschlusses zu jeweils genau einer Steuerung ist insbesondere erforderlich, um Fehlbedienungen der Steuerungen zu verhindern. Hierzu sind zweckmäßig in dem Anschluß Sicherheitselemente, beispielsweise eine Sicherheitsleitung oder ein Sicherheitsschaltkreis, vorgesehen. Solche Sicherheitselemente können einerseits zur Verhinderung einer versehentlichen Fehlbedienung der Steuerung über das Bedien- und Visualisierungsgerät vorgesehen sein, beispielsweise um Maximalverfahrbereiche von Roboterarmen nicht zu überschreiten. Andererseits kann mittels in dem Anschluß vorgesehener Sicherheitselemente auch unmittelbar auf Sicherheitsschaltkreise oder Sicherheitselemente der Steuerung, beispielsweise einem Not-Aus, eingewirkt werden. Auch kann mittels in dem Anschluß vorgesehener Sicherheitselemente, die als Redundanzelemente zur Überprüfung und Verifikation der Zugriffsberechtigung ausgeführt sind, sichergestellt werden, daß nur über den einer Steuerung zugeordneten Anschluß und nicht von einem anderen, an die Kommunikationsleitung angeschlossenen Anschluß in den Steuerungsablauf der Steuerung eingegriffen werden kann. Hierzu ist in dem Anschluß zweckmäßig eine zusätzliche Verbindungsleitung als Sicherheitsleitung vorgesehen, die, sobald ein Bedien- und Visualisierungsgerät an dem Anschluß angeschlossen ist, eine drahtgebundene Verbindung zwischen der Steuerung und/oder einem aktiven Sicherheitsschaltkreis der Steuerung einerseits und dem Bedien- und Visualisierungsgerät andererseits herstellt.
Eine solche Sicherheitsmaßnahme ist insbesondere dann zweckmäßig, wenn die Kommunikationsleitung 10, wie hier in Figur 1 dargestellt, in einer besonders bevorzugten Ausführungsform der Erfindung als Ethemet-Leitung als Teil eines IP-Netzwerkes ausgebildet ist. Den Steuerungen als Teilnehmer des IP-Netzwerkes sind dann jeweils IP-Adressen zugeordnet, mittels derer die Steuerungen von überall in dem Netzwerk eindeutig aufrufbar sind.
Da die Anschlüsse 15A, 15B₁, 15B₂, 15C zwar definiert jeweils einer Steuerung A, B oder C zugeordnet sind, die Anschlüsse 15A, 15B₁, 15B₂, 15C aber hardwareseitig nicht ausschließlich mit der jeweils zugeordneten Steuerung A, B oder C verbunden sind, sondern über die Kommunikationsleitung 10 letztlich mit allen an der Kommunikationsleitung angeschlossenen Steuerungen A, B und C verbunden sind, ist es erforderlich, eine anderweitige Zuordnung eines Anschlusses 15A, 15B₁, 15B₂, 15C zu einer Steuerung bereitzustellen. Erfindungsgemäß umfaßt hierzu jeder der Anschlüsse 15A, 15B₁, 15B₂, 15C ein auslesbares Mittel zur Identifikation des dem Anschluß als zugeordnet definierten Teilnehmers. Das auslesbare Mittel ist von dem an den Anschluß anschließbaren Interfaceelement 20 auslesbar. In der in Figur 1 dargestellten Ausführung der Erfindung ist das auslesbare Mittel jeweils als Speicherelement ausgeführt und in dem jeweiligen Anschluß 15A, 15B₁, 15B₂ und 15C angeordnet. In dem Speicherelement ist die IP-Adresse der zugeordneten Steuerung A, B oder C abgelegt. Ein Bedien- und Visualisierungsgerät 20, das an den jeweiligen Anschluß 15A, 15B₁, 15B₂, 15C angeschlossen wird, liest zunächst die IP-Adresse aus dem Speicherelement aus und stellt sodann eine Verbindung zur Datenkommunikation mit der zugeordneten Steuerung A, B oder C her.

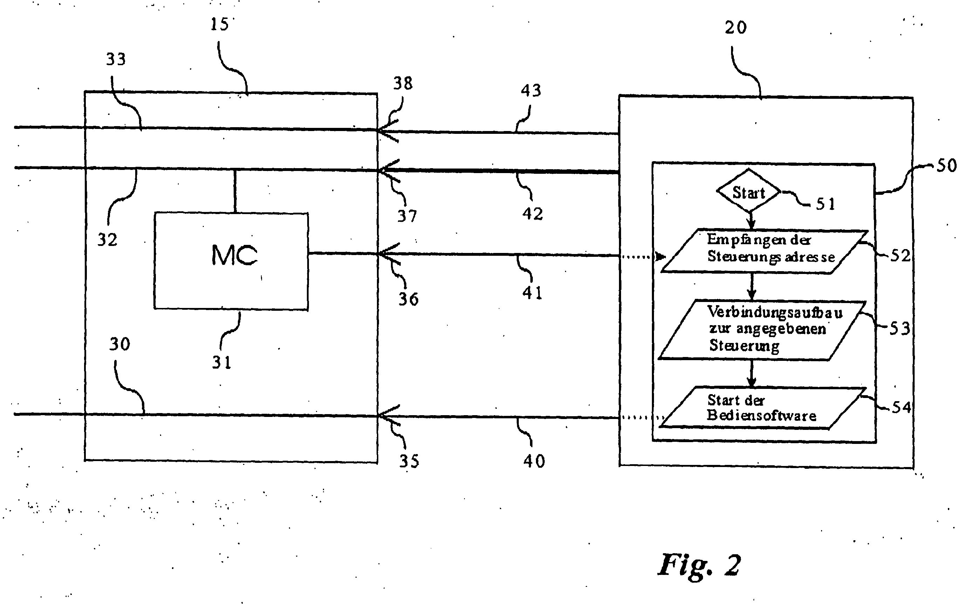

In Figur 2 ist ein erfindungsgemäß ausgeführter Anschluß 15 mit einem hieran angeschlossenen portablen Bedien- und Visualisierungsgerät 20 dargestellt. Der Anschluß 15 umfaßt neben einem mit einer Ethernet-Leitung 30 verbundenen Anschlußelement 35 einen Microcontroller (MC) 31 mit Anschlußelement 36, eine Spannungsversorgungsleitung 32 mit Anschlußelement 37 und eine Sicherheitsleitung 33 mit Anschlußelement 38. Die Sicherheitsleitung 33 ist hierbei als Verbindungsleitung mit einem Sicherheitselement oder einem Sicherheitsschaltlaeis der zugeordneten Steuerung verbunden. Zweckmäßig sind alle Anschlußelemente 35, 36, 37 und 38 in einem Verbindungselement, beispielsweise einem Steckverbinder, zusammengefasst. Wird ein portables Bedien- und Visualisierungsgerät 20 angeschlossen, so werden, wie in Figur 2 dargestellt, alle vier Anschlußelemente 35, 36, 37 und 38 mit jeweils gegenpolig ausgeführten Anschlußelementen 40, 41, 42 und 43 des portablen Bedien- und Visualisierungsgeräts 20 verbunden. Auch die Anschlußelemente 40, 41, 42 und 43 sind zweckmäßig in einem Steckverbinder zusammengefaßt.
Zur Identifikation des dem Anschluß 15 als zugeordnet definierten Teilnehmers umfaßt der Microcontroller 31 ein in Figur 1 nicht dargestelltes Speicherelement, das hier als E²PROM ausgeführt ist und in dem die IP-Adresse des zugeordneten Teilnehmers, hier der Steuerung, auslesbar gespeichert ist.

Wird nun das portable Bedien- und Visualisierungsgerät 20 an den Anschluß 15 angeschlossen, so wird in dem Bedien- und Visualisierungsgerät 20 zunächst entsprechend Programmverfahrensschritt 51 eine Software 50 gestartet, die in einem ersten Schritt 52 die Anschlussdaten und insbesondere die IP-Adresse aus dem E²PROM des Microcontrollers 31 ausliest. In einem zweiten Schritt 53 wird auf der Basis der ausgelesenen Anschlussdaten über die Ethemet-Kommunikationsleitung 30 und 10 (10 in Figur 1 dargestellt) eine Verbindung zu demjenigen Teilnehmer A, B oder C aufgebaut, der dem Anschluß zugeordnet ist und mittels der IP-Adresse eindeutig identifizierbar ist. Üblicherweise wird zum Verbindungsaufbau ein Verbindungsaufbauprotokoll abgearbeitet. Erst in einem weiteren Schritt 54 wird dann die Bedien- und Visualisierungssoftware zur Bedienung und Visualisierung der Abläufe des Teilnehmers gestartet.
Zweckmäßig ist das E²PROM des Microcontrollers 31 in einem Initialisierungsschritt innerhalb eines Konfigurationsmenüs über das portable Bedien- und Visualisierungsgerät 20 programmierbar. Hierbei wird die IP-Adresse des zugeordneten Teilnehmers in dem E²PROM abgelegt.

Mittels der in den Figuren 1 und 2 dargestellten, erfindungsgemäßen Ausführung des Kommunikationssystems wird einerseits der Bedienkomfort für einen Bediener erhöht, da die Identifikation des zugeordneten Teilnehmers vollautomatisch abläuft und keine manuelle Steuerungsauswahl mehr erforderlich ist. Des weiteren kann hier aber auch ein Schutz gegen versehentliche oder auch beabsichtigte Fehlbedienung vorgesehen werden, da nur Anlagenteile der Fertigungsanlage bedient werden können, die mit dem jeweiligen Anschluß sicherheitstechnisch verdrahtet sind.
Ferner kann die Sicherheitsleitung auch so verbunden sein, daß hierüber unmittelbar auf einen oder mehrere, in der Steuerung vorgesehene Sicherheitsschaltkreise, beispielsweise einen Not-Aus, eingewirkt werden kann.

## Patentansprüche

1. Kommunikationssystem (1) mit einer Mehrzahl von Teilnehmern (A, B, C), wobei die Teilnehmer über eine Kommunikationsleitung (10) miteinander verbunden sind,
und wobei weiterhin zumindest ein Anschluss (15; 15A, 15B₁, 15B₂, 15C) zum Anschließen eines Interfaceelements (20) zur Kommunikation mit einem der Teilnehmer, der dem Anschluss (15; 15A, 15B₁, 15B₂, 15C) als zugeordnet definiert ist, mit der Kommunikationsleitung (10) verbunden ist,
**dadurch gekennzeichnet, dass**
der Anschluss (15; 15A, 15B₁, 15B₂, 15C) ein auslesbares Mittel zur Identifikation des dem Anschluss als zugeordnet definierten Teilnehmers umfasst, wobei das auslesbare Mittel von dem an den Anschluss anschließbaren Interfaceelement (20) ausgelesen wird.

2. Kommunikationssystem nach Anspruch 1,
wobei das Kommunikationssystem (1) als lokales Netzwerk ausgebildet ist.

3. Kommunikationssystem nach Anspruch 2,
wobei das lokale Netzwerk ein Ethernet-Netzwerk ist.

4. Kommunikationssystem nach einem der vorhergehenden Ansprüche,
wobei die Kommunikationsleitung (10) eine Datenleitung ist.

5. Kommunikationssystem nach einem der vorhergehenden Ansprüche,
wobei das Interfaceelement (20) ein Bedien- und Visualisierungsinterface ist.

6. Kommunikationssystem nach Anspruch 5,
wobei das Bedien- und Visualisierungsinterface ein portables Terminal ist.

7. Kommunikationssystem nach einem der vorhergehenden Ansprüche,
wobei die Teilnehmer (A, B, C) Steuerungen zur Steuerung von Maschinen und/oder Robotereinheiten sind.

8. Kommunikationssystem nach einem der vorhergehenden Ansprüche,
wobei eine Vielzahl von Anschlüssen (15A, 15B₁, 15B₂, 15C) zum Anschließen eines oder mehrerer Terminals jeweils zur Kommunikation mit einem dem jeweiligen Anschluss als zugeordnet definierten Teilnehmer mit der Kommunikationsleitung (10) verbunden sind.

9. Konununikationssystem nach einem der vorhergehenden Ansprüche,
wobei das auslesbare Mittel zur Identifikation des dem Anschluss als zugeordnet definierten Teilnehmers ein programmierbarer Controller (31) ist.

10. Kommunikationssystem nach Anspruch 9,
wobei der Controller (31) über eine separate, in dem Anschluss (15) vorgesehene Verbindungsleitung (41), vorzugsweise einen separaten seriellen Anschlussdraht, mit dem Interfaceelement (20) verbindbar und auslesbar ist.

11. Kommunikationssystem nach einem der Ansprüche 9 oder 10,
wobei der programmierbare Controller (31) ein permanentes Speicherelement zur Speicherung einer Identifikationsinformation umfasst, das zweckmäßig in einer Konfigurationsphase mittels des Interfaceelements programmierbar ist.

12. Kommunikationssystem nach einem der vorhergehenden Ansprüche,
wobei der Anschluss (15) zusätzlich eine Sicherheitsleitung (33) umfasst, die den zugeordneten Teilnehmer (A, B, C) unmittelbar mit einem an den Anschluss angeschlossenen Interfaceelement (20) verbindet.

13. Kommunikationssystem nach einem der vorhergehenden Ansprüche,
wobei der Anschluss (15) zusätzlich eine Spannungsversorgungsleitung (32) zur Spannungsversorgung eines an den Anschluss angeschlossenen Interfaceelements umfasst.

14. Kommunikationssystem nach einem der vorhergehenden Ansprüche,
wobei das Kommunikationssystem (1) als IP-Netzwerk ausgebildet ist und in dem auslesbaren Mittel eine IP-Adresse des dem Anschluss als zugeordnet definierten Teilnehmers abgelegt ist.

15. Anschluss (15) zur Verwendung in einem Kommunikationssystem (1) gemäß einem der Ansprüche 1 bis 14, mit einem auslesbaren Mittel zur Identifikation eines dem Anschluss zugeordneten Teilnehmers.

16. Interfaceelement (20) zur Verwendung in einem Kommunikationssystem (1) gemäß einem der Ansprüche 1 bis 14, mit einem Mittel zur Anbindung an einen Anschluss und zur Identifikation eines dem Anschluss zugeordneten Teilnehmers.

17. Verfahren zur Identifikation eines einem Anschluss als zugeordnet definierten Teilnehmers eines Kommunikationssystems,
wobei das Kommunikationssystem eine Mehrzahl von Teilnehmer umfasst, die über eine gemeinsame Kommunikationsleitung miteinander verbunden sind,
und wobei weiterhin zumindest ein Anschluss zum Anschließen eines Interfaceelements zur Kommunikation mit dem definierten Teilnehmer, der dem Anschluss als zugeordnet definiert ist, mit der Kommunikationsleitung verbunden ist,
wobei das Verfahren die folgenden Verfahrensschritte umfasst:
• Anschließen des Interfaceelements an den Anschluss;
• Auslesen eines in dem Anschluss angeordneten Mittels zur Identifikation des dem Anschluss als zugeordnet definierten Teilnehmers, vorzugsweise Auslesen einer IP-Adresse;
• Herstellen einer Kommunikationsverbindung zwischen dem Interfaceelement und dem Anschluss als zugeordnet definierten Teilnehmer.

18. Verfahren nach Anspruch 17, wobei ein Kommunikationssystems gemäß einem der Ansprüche 1 bis 14 verwendet wird.

## Claims

1. Communication system (1) with several subscribers (A, B, C), where the subscribers are linked to each other via a communication line (10). At least one port (15; 15A, 15B1, 15B2, 15C) is connected to the communication line (10), enabling an interface element (20) to be connected for communication with one of the subscribers who is defined as allocated to the port (15; 15A, 15B1, 15B2, 15C). The port (15; 15A, 15B1, 15B2, 15C) of the communication system includes a readable medium to identify the subscriber as allocated to the port. The readable medium on the port is read by the connectable interface element (20).

2. Communication system in accordance requirement 1, where the communication system (1) is set as the local network.

3. Communication system in accordance with requirement 2, where the local network is an Ethernet network.

4. Communication system in accordance with one of the previous requirements, where the communication line (10) is a data line.

5. Communication system in accordance with one of the previous requirements, where the interface element (20) is an operating and visualization interface.

6. Communication system in accordance with requirement 5, where the operating and visualization interface is a portable terminal.

7. Communication system in accordance with one of the previous requirements, where the subscribers (A,B,C) are controls for controlling machines and/or robotic units.

8. Communication system in accordance with one of the previous requirements, where many ports (15; 15A, 15B1, 15B2, 15C) are connected to the communication line (10) for connecting one or several terminals for communication with the subscriber defined as allocated to the relevant port.

9. Communication system in accordance with one of the previous requirements, where the readable medium for identifying the subscriber defined as allocated to the port is a programmable controller (31).

10. Communication system in accordance with requirement 9, where the controller (31) can be connected to and read by the interface element (20) via a separate connection line (41) located in the port (15), preferably a separate serial connection line.

11. Communication system in accordance with requirements 9 or 10, where the programmable controller (31) includes a permanent memory element for saving identification information, which can be programmed into a configuration phase via the interface element.

12. Communication system in accordance with one of the previous requirements, where the port (15) also includes a safety line (33), which connects the allocated subscribers (A,B,C) directly with an interface element (20) connected to the port.

13. Communication system in accordance with one of the previous requirements, where the port (15) also includes a voltage line (32) for supplying power to an interface element connected to the port.

14. Communication system in accordance with one of the previous requirements, where the communication system (1) is set as an IP network. An IP address of the subscriber allocated to the port is included in the readable medium.

15. Port (15) for use in a communication system (1) in accordance with one of the requirements 1-14, with a readable medium for the identification of a subscriber allocated to the port.

16. Interface element (20) for use in a communication system (1) in accordance with one of the requirements 1-14, with a method for connecting to a port and for identifying a subscriber allocated to the port.

17. Procedure for identifying a subscriber allocated to a port in a communication system, where the communication system includes several subscribers connected via a shared communication line. At least one port is connected to the communication line for connecting an interface element with the subscriber defined as allocated to the port. The procedure includes the following steps:
• Connection of the interface element to the port;
• Reading out the identification medium in the port for identifying the subscriber allocated to the port, preferably an IP address;
• Establishing a communication connection between the interface element and the port as defined allocated subscriber.

18. Procedure in accordance with requirement 17, where the communication system is used in accordance with one of the requirements 1 to 14.

## Revendications

1. Système de communication (1) comprenant plusieurs participants (A, B, C) reliés entre eux par une ligne de communication (10) et dans lequel, en outre, au moins une connexion (15 ; 15A, 15B₁, 15B₂, 15C) est reliée à la ligne de communication (10) pour y raccorder un élément d'interface (20) permettant la communication avec l'un des participants, défini comme attribué à la connexion (15 ; 15A, 15B₁, 15B₂, 15C); Système de communication **se caractérisant par le fait que** la connexion (15 ; 15A, 15B₁, 15B₂, 15C) comprend un dispositif lisible d'identification du participant défini comme attribué à la connexion, sachant que le dispositif lisible est lu par l'élément d'interface (20) pouvant être relié à la connexion.

2. Système de communication selon la revendication 1,sachant que le système de communication (1) est défini comme un réseau local.

3. Système de communication selon la revendication 2, sachant que le réseau local est un réseau Ethernet.

4. Système de communication selon l'une des revendications précédentes, sachant que la ligne de communication (10) est une ligne de données.

5. Système de communication selon l'une des revendications précédentes, sachant que l'élément d'interface est une interface de commande et de visualisation.

6. Système de communication selon la revendication 5, sachant que l'interface de commande et de visualisation est un terminal portatif.

7. Système de communication selon l'une des revendications précédentes, sachant que les participants, (A, B, C) sont des modules de commande conçus pour le pilotage de machines et/ou de robots.

8. Système de communication selon l'une des revendications précédentes, sachant qu'un grand nombre de connexions (15 ; 15A, 15B₁, 15B₂, 15C) sont reliées à la ligne de communication (10) en vue de raccorder un ou plusieurs terminaux permettant chacun la communication avec un participant défini comme attribué à la connexion correspondante.

9. Système de communication selon l'une des revendications précédentes, sachant que le dispositif lisible est un contrôleur programmable (31) d'identification du participant défini comme attribué à la connexion.

10. Système de communication selon la revendication 9, sachant que le contrôleur (31) est lisible et raccordable à l'élément d'interface (20) via une ligne de connexion (41) séparée prévue dans la connexion (15), de préférence un câble de raccordement en série séparé.

11. Système de communication selon l'une des revendications 9 et 10, sachant que le contrôleur programmable (31) comprend un élément de mémoire permanent permettant la sauvegarde d'une information d'identification et pouvant être programmé par une configuration appropriée à l'aide de l'élément d'interface.

12. Système de communication selon l'une des revendications précédentes, sachant que la connexion (15) comprend en outre une ligne de sécurité (32) qui relie directement le participant attribué (A, B, C) à un élément d'interface (20) raccordé à la connexion.

13. Système de communication selon l'une des revendications précédentes, sachant que la connexion (15) comprend en outre une ligne d'alimentation électrique (32) pour l'alimentation électrique d'un élément d'interface raccordé à la connexion.

14. Système de communication selon l'une des revendications précédentes, sachant que le système de communication (1) est défini comme un réseau IP et qu'une adresse IP, relevant du participant défini comme attribué à la connexion, est sauvegardée dans le dispositif lisible.

15. Connexion (15) conçue pour une utilisation au sein d'un système de communication (1) selon l'une des revendications 1 à 14, comprenant un dispositif lisible d'identification d'un participant attribué à la connexion.

16. Elément d'interface (20) pour une utilisation au sein d'un système de communication (1) elon l'une des revendications 1 à 14, comprenant un dispositif de raccordement à une connexion et d'identification d'un participant attribué à la connexion.

17. Procédure d'identification d'un participant à un système de communication, défini comme attribué à une connexion, sachant que le système de communication comprend plusieurs participants reliés entre eux par l'intermédiaire d'une ligne de communication commune, et sachant en outre qu'au moins une connexion est reliée à la ligne de communication pour y raccorder un élément d'interface permettant la communication avec le participant défini, qui est défini comme attribué à la communication, sachant que la procédure comprend les étapes suivantes :
• raccordement de l'élément d'interface à la connexion ;
• lecture d'un dispositif intégré à la connexion en vue de l'identification du participant défini comme attribué à la connexion, de préférence lecture d'une adresse IP ;
• établissement d'une liaison de communication entre l'élément d'interface et le participant défini comme attribué à la connexion.

18. Procédure selon la revendication 17, sachant qu'un système de communication est utilisé conformément aux revendications 1 à 14.
